**Europäisches Patentamt**

**European Patent Office**

**Office européen des brevets**

(19)

(11) Veröffentlichungsnummer: **0 071 984**
**B1**

(12)
# EUROPÄISCHE PATENTSCHRIFT

(45) Veröffentlichungstag der Patentschrift:
**03.06.87**

(51) Int. Cl.⁴: **G 02 C 3/00**

(21) Anmeldenummer: **82107073.7**

(22) Anmeldetag: **05.08.82**

(54) **Ansatzstück für einen Brillenbügel.**

(30) Priorität: **12.08.81 DE 3131801**

(43) Veröffentlichungstag der Anmeldung:
**16.02.83 Patentblatt 83/7**

(45) Bekanntmachung des Hinweises auf die Patenterteilung:
**03.06.87 Patentblatt 87/23**

(84) Benannte Vertragsstaaten:
**AT BE CH DE FR IT LI NL**

(56) Entgegenhaltungen:
**FR - A - 2 280 097**
**FR - A - 2 360 903**
**US - A - 1 833 792**
**US - A - 2 172 959**

(73) Patentinhaber: **Ehring, Markus, Christoffelsberg 28,
D-4788 Warstein 1 (DE)**

(72) Erfinder: **Ehring, Markus, Christoffelsberg 28,
D-4788 Warstein 1 (DE)**

ACTORUM AG

**Beschreibung**

Die Erfindung betrifft ein Ansatzstück für einen Brillenbügel, das aus einem Steg, der eine in seiner Längsrichtung verlaufende, in der Gebrauchsstellung den Brillenbügel aufnehmende Durchführung aufweist und lösbar am Brillenbügel befestigbar ist und einem an diesen anschliessenden, die Ohrwurzel umfassenden Endteil besteht.

Ein derartiges Ansatzstück ist aus der FR-A-2 280 097 bekannt und dient zur Umrüstung einer normalen Brille in eine Sportbrille. Auf diese Weise wird auch bei heftigen Bewegungen, z.B. hervorgerufen durch eine sportliche Betätigung, ein sicherer und fester Sitz der Brille ermöglicht. Das Ansatzstück besteht im wesentlichen aus einem Steg, das über den Brillenbügel geschoben werden kann und an diesem mittels einer Klemmschraube befestigbar ist. An dem Steg ist ein flexibler Bügel befestigt, welcher die Ohrmuschel halbkreisförmig umgreift. Das an dem Brillenbügel überstehende Basisteil führt jedoch zu einer unangenehmen Behinderung des Benutzers.

Ferner ist aus der US-A-1 833 792 ein lösbares Ansatzstück für einen Brillenbügel bekannt, das mittels zweier Stege an dem Brillenbügel festklemmbar ist. Dieses Ansatzstück gewährleistet keinen festen Sitz der Brille, wie es zum Beispiel bei einer sportlichen Betätigung erforderlich ist. Es wird im bekannten Fall lediglich angestrebt und bewirkt, dass die Brille auf dem Nasenrücken nicht nach vorne rutscht.

Der Erfindung liegt die Aufgabe zugrunde, ein Ansatzstück für einen Brillenbügel verfügbar zu machen, das auch bei sportlicher Betätigung einen festen Sitz garantiert und zu keiner Behinderung des Benutzers führt.

Diese Aufgabe wird bei einem Ansatzstück der im Oberbegriff des Anspruchs 1 genannten Art dadurch gelöst, dass in dem Steg im Übergangsbereich zu dem Endteil eine in Gebrauchsstellung der Brille vertikal durch den Steg hindurchführende Öffnung zum Hindurchstecken des Brillenbügels vorgesehen ist, an die anschliessend einerseits der Steg bis zu seinem freien Ende hin einen in Gebrauchsstellung nach unten offenen, U-förmigen Querschnitt, und andererseits der Übergangsbereich zum Endteil einen nach oben offenen, U-förmigen Querschnitt aufweist, so dass ein Hineinschwenken des Brillenbügels aus der Hindurchsteckstellung in die Gebrauchsstellung möglich ist.

Durch das Ansatzstück wird sowohl für die normale Verwendung als auch bei sportlicher Betätigung nur noch eine Brille benötigt. Die Normalbrille wird auf einfache Weise im Bedarfsfall zur Sportbrille umgerüstet, indem das Ansatzstück gemäss der Erfindung mit dem Brillenbügel verbunden wird.

Weitere Ausführungsformen der Erfindung sind in den Unteransprüchen gekennzeichnet. Das Wesen der Erfindung soll anhand eines in den Figuren dargestellten Ausführungsbeispiels näher erläutert werden. Es zeigen

Fig. 1 die Seitenansicht eines Ansatzstückes gemäss der Erfindung;

Fig. 2 die Draufsicht des Ansatzstückes;

Fig. 3 den Schnitt C–D in Fig. 2;

Fig. 4 die rechte Seitenansicht E des Ansatzstücks nach Fig. 1;

Fig. 5 den Schnitt A–B der Fig. 1;

Fig. 6 eine Darstellung zur Erläuterung der Befestigung des Ansatzstückes an den Brillenbügel.

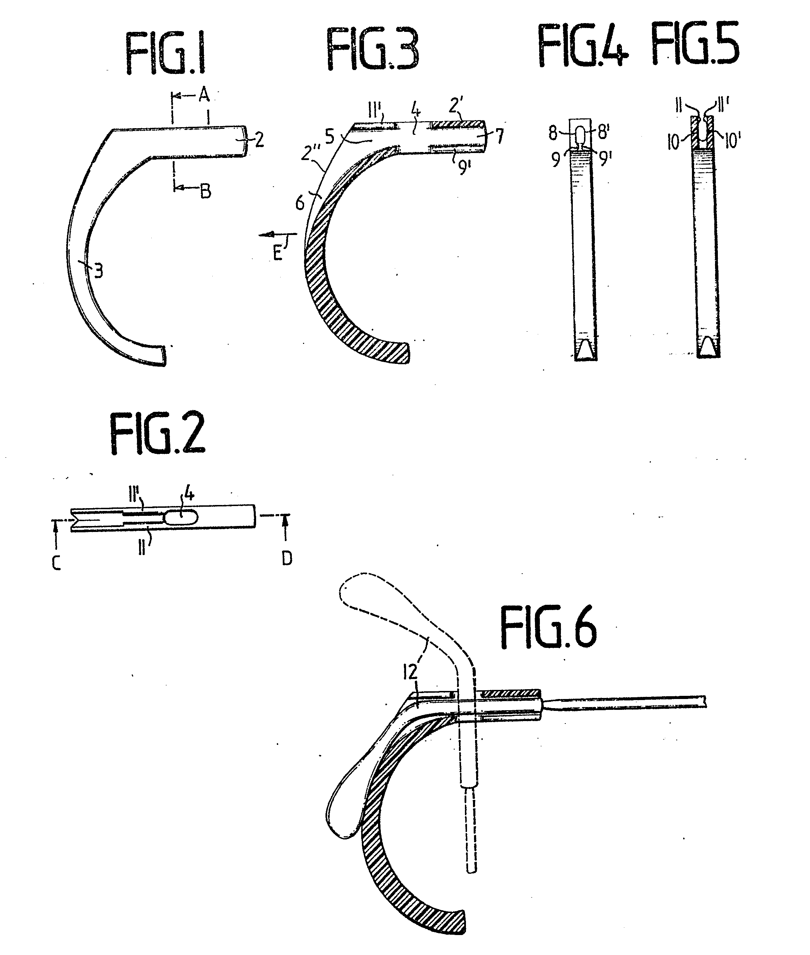

Das Ansatzstück 1 weist einen stegförmigen Teil bzw. Steg 2 auf, der in ein die Ohrwurzel umfassendes Endteil 3, dem Bügelende des Ansatzstücks übergeht. In dem Steg 2 ist eine Öffnung 4 vorgesehen. Die Öffnung 4 ist so ausgebildet, dass der in Fig. 6 dargestellte Brillenbügel 12 eines normalen Brillengestells von unten her (Fig. 1, Fig. 2) durchgesteckt werden kann. Im ohrabgewandten Übergangsbereich 2″ zum Endteil 3 verlaufend ist eine Aufnahmeöffnung 5 und zum ohrzugewandten Teil 2′ des Stegs 2 eine Aufnahmeöffnung 7 für den Brillenbügel 12 vorgesehen. Diese Ausbildung des Stegs verhindert bereits bei aufgesetzter Brille eine Scherung des Ansatzstücks 1 relativ zu dem Brillenbügel 12. Die Aufnahmeöffnung 5 des Stegs 2 setzt sich in dem Ansatzstück als sich nach unten verjüngende Nut 6 fort, die eine abnehmende Tiefe aufweist. Auf der Innenseite der Wandungen 8, 8′ und 10, 10′ des Übergangsbereichs 2′ und des Teils 2″ sind jeweils zwei Noppen 9, 9′ und 11, 11′ angeformt. Das Ansatzstück ist einstückig ausgebildet und besteht aus einem thermoplastischen Kunststoff. Die Wandungen 8, 8′ und 10, 10′ lassen sich daher elastisch nach aussen biegen und bilden in Verbindung mit den Noppen 9, 9′ und 11, 11′ einen Klemm- bzw. Schnappverschluss. Zur Befestigung des Ansatzstücks 1 auf dem Brillenbügel 12 (Fig. 6) eines normalen Brillengestells wird das Ansatzstück nach dem Durchstecken des Brillenbügels nach unten geschwenkt, bis das Ende des Brillenbügels auf dem Grund der Nut 6 des Endteils 3 des Ansatzstücks anliegt. Dabei wird gleichzeitig der geradlinig verlaufende Teil des Brillenbügels 12 von den beiden Aufnahmeöffnungen 5 und 7 des Stegs 2 umschlossen. Die kraftschlüssige Verbindung des Ansatzstücks 1 mit dem Brillenbügel 12 wird durch einen aus den elastischen Wandungen und Noppen gebildeten Klemm- bzw. Schnappverschluss bewirkt. Dazu werden bei der Schwenkbewegung des Ansatzstücks durch den Brillenbügel die Noppen zunächst nach aussen gedrückt und gehen nach dem Durchtritt des Brillenbügels, unter Bildung einer kraftschlüssigen Verbindung mit dem Brillenbügel in ihre Ausgangslage zurück. Der Brillenbügel ist dann in dem Übergangsberich 5 und dem Teil 7 eingeschlossen und gehalten. Durch eine Schwenkung des Ansatzstücks in umgekehrter Richtung lässt sich der Brillenbügel aus dem Übergangsbereich 5 und dem Teil 7 herausdrükken und über die Öffnung 4 entfernen.

Das Ansatzstück wird in seiner Form an den vorhandenen Brillenbügel derart angepasst, dass sich einerseits eine sichere kraftschlüssige Verbindung herstellen lässt und andererseits das Ansatzstück einen sicheren Sitz des Brillengestells gewährleistet.

## Patentansprüche

1. Ansatzstück für einen Brillenbügel, das aus einem Steg, der eine in seiner Längsrichtung verlaufende, in der Gebrauchsstellung den Brillenbügel aufnehmende Durchführung aufweist und lösbar am Brillenbügel befestigbar ist und einem an diesen anschliessenden, die Ohrwurzel umfassenden Endteil'besteht, dadurch gekennzeichnet, dass in dem Steg (2) im Übergangsbereich zu dem Endteil (3) eine in Gebrauchsstellung der Brille vertikal durch den Steg hindurchführende Öffnung (4) zum Hindurchstecken des Brillenbügels (12) vorgesehen ist, an die anschliessend einerseits der Steg (2) bis zu seinem freien Ende hin einen in Gebrauchsstellung nach unten offenen, U-förmigen Querschnitt, und andererseits der Übergangsbereich (2'') zum Endteil (3) einen nach oben offenen, U-förmigen Querschnitt aufweist, so dass ein Hineinschwenken des Brillenbügels (12) aus der Hindurchsteckstellung in die Gebrauchsstellung möglich ist.

2. Ansatzstück nach Anspruch 1, dadurch gekennzeichnet, dass der Steg (2) eine Klemm- bzw. Schnappeinrichtung zur kraftschlüssigen Verbindung mit dem Brillenbügel aufweist.

3. Ansatzstück nach Anspruch 2, dadurch gekennzeichnet, dass in dem nach unten offenen Bereich (2') zwei Noppen (9, 9') an den Seitenwänden (8, 8') vorgesehen sind, und dass die Seitenwände in diesem Bereich (2') elastisch ausgebildet sind.

4. Ansatzstück nach Anspruch 2 oder 3, dadurch gekennzeichnet, dass in dem nach oben offenen Bereich (2'') zwei Noppen (11, 11') an den Seitenwänden (10, 10') vorgesehen sind und dass die Seitenwände dieses Bereichs (2'') elastisch ausgebildet sind.

5. Ansatzstück nach einem der Ansprüche 2 bis 4, dadurch gekennzeichnet, dass der nach oben offene Bereich (2'') als sich nach unten verjüngende Nut ausgebildet ist und sich bei abnehmender Nuttiefe in dem Endteil (3) fortsetzt.

6. Ansatzstück nach einem der Ansprüche 1 bis 5, dadurch gekennzeichnet, dass es einstückig ausgebildet ist.

7. Ansatzstück nach Anspruch 6, dadurch gekennzeichnet, dass es aus einem bei Raumtemperatur elastischen thermoplastischen Kunststoff besteht.

## Claims

1. A connecting piece for a spectacle sidearm, comprising a stem provided with a longitudinally extending passageway accommodating the sidearm in the using position and being detachably fixed to the sidearm, and comprising an end portion coupled to the sidearm and embracing the ear root, characterized in that provided in the stem (2), in the transitory region passing over to the end portion (3), is an aperture (4) vertically extending in the using position of the spectacle through the stem for plugging therethrough the spectacle sidearm (12), pursuant to which, on the one hand, the sidearm (12), down to its free end, is of a U-shaped cross-section which, in the using position, is open at the bottom and, on the other hand, the transitory region (2'') passing over to the end portion (3) is of a U-shaped cross-section open at the top thereby enabling the sidearm (12) to swing from the plug-through position into the using position.

2. A connecting piece according to claim 1, characterized in that the stem (2) comprises a clamping or snapping mechanism to provide a forcelocking connection with the spectacle sidearm.

3. A connecting piece according to claim 2, characterized in that in the area (2') open toward the bottom, two naps (9, 9') are provided on the side walls (8, 8'), and that the side walls in the area (2') are flexibly formed.

4. A connecting piece according to claims 2 or 3, characterized in that, in the area (2'') open at the top, two naps (11, 11') are provided on the side walls (10, 10'), and that the side walls of this area (2'') are resiliently formed.

5. A connecting piece according to any one of claims 2 to 4, characterized in that the area (2'') open at the top is in the form of a downwardly tapering groove and, with a decreasing groove depth, extends into the end portion (3).

6. A connecting piece acccording to any one of claims 1 to 5, characterized in that it is of an integral formation.

7. A connecting piece according to claim 6, characterized in that it is made of a thermoplastic material resilient at room temperature.

## Revendications

1. Rallonge pour une branche de lunette qui se compose d'une entretoise présentant un passage en direction longitudinale dans sa position d'usage pour insérer la branche de lunette et fixée de manière amovible sur la branche de lunette et qui comprend également une extrémité contournant la racine de l'oreille qui prolonge l'entretoise caractérisée par la particularité qu'une ouverture (4) traversant verticalement l'entretoise en position d'usage de la lunette est prévue dans l'entretoise (2) dans la zone de transition vers l'extrémité (3), cette ouverture étant destinée à passer la branche de lunette (12). A cette ouverture vient se joindre d'une part l'entretoise (2) qui présente vers l'extrémité libre une section en U ouverte vers le bas en position d'usage et, d'autre part, vers la partie finale (3), une zone de transition (2'') à section en U, ouverte vers le haut afin que le pivotement de la branche de lunette (12) dans la position d'usage puisse avoir lieu à partir de sa position d'enfichement de passage.

2. Rallonge selon la revendication 1, se distinguant par le fait que l'entretoise (2) présente un dispositif de serrage ou d'encliquetage pour obtenir une jonction rigide avec la branche de lunette.

3. Rallonge selon la revendication 2, se distinguant par le fait que la zone ouverte vers le bas (2) présente deux noppes (9, 9') sur les plans latéraux (8, 8') et que les plans latéraux sont formés de manière élastique dans cette zone (2').

4. Rallonge selon la revendication 2 ou 3, se distinguant par le fait que la partie ouverte vers le haut (2'') présente deux noppes (11, 11') sur les plans latéraux (10, 10') et que les plans latéraux de cette zone sont formés élastiquement (2'').

5. Rallonge selon l'une des revendications 2 à 4, se distinguant par le fait que la zone ouverte vers le haut (2'') est usinée sous forme d'une rainure à conicité décroissante vers le bas se prolongeant dans l'extrémité (3) en fonction de la diminution de conicité de profondeur.

6. Rallonge selon l'une des revendications 1 à 5, se distinguant par le fait que cette rallonge est formée d'une seule pièce.

7. Rallonge selon la revendication 6, se distinguant par le fait que cette rallonge consiste en une matière thermoplastique élastique à température ambiante.

FIG.1

FIG.3

FIG.4  FIG.5

FIG.2

FIG.6